# EUROPÄISCHE PATENTANMELDUNG

(11) **EP 1 862 053 A1**
(43) Veröffentlichungstag der Anmeldung: **05.12.2007**
(21) Anmeldenummer: 07009935.3
(22) Anmeldetag: 18.05.2007
(51) Int. Cl.: A01C 17/00

(54) **Schleuderdüngerstreuer**

(30) Priorität: 02.06.2006 DE 102006025823
(71) Anmelder: Amazonen-Werke H. Dreyer GmbH & Co. KG, 49205 Hasbergen (DE)
(72) Erfinder: Giehoff, Stefan, 49080 Osnabrück (DE)

(57) **Zusammenfassung**

Schleuderdüngerstreuer (1), bestehend aus einem rieselförmiges Streugut, insbesondere Dünger enthaltenden Vorratsbehälter (3) mit wenigstens einem einstellbaren Auslauf (6), und einer unterhalb dessen umlaufenden Schleuderscheibe (9,10) mit mindestens einer eine das zu verteilende Streugut auf Abwurfgeschwindigkeit beschleunigende Leitfläche (12) aufweisenden Wurfschaufel (11). Um eine Zerstörung der Düngerpartikel beim ersten Kontakt nach dem Dosieren mit der Düngerfläche der Wurfschaufel (11) möglichst zu vermeiden und ein unkontrolliertes Wegspringen der Streugutpartikel beim Kontakt bei der Leitfläche (12) der Wurfschaufel (11) zu vermindern, ist vorgesehen, dass zumindest die Leitfläche (12) des Wurfschaufel (11), mittels eines Feder- und/oder Dämpfungssystems zur Minderung der zumindest in der ersten Phase des Kontaktes zwischen Leitfläche (12) und Partikel des Streugutes entstehenden Kontaktkraft auf der Schleuderscheibe angeordnet ist.

## Beschreibung

Die Erfindung betrifft einen Schleuderdüngerstreuer gemäß des Oberbegriffes des Patentanspruches 1.

Ein derartiger Schleuderdüngerstreuer ist beispielsweise in der DE 43 40 238 A1 beschrieben. Dieser Schleuderdüngerstreuer weist einen Vorratsbehälter auf, in dessen unterem Bereich ein als einstellbarer Auslauf ausgebildetes Dosierorgan angeordnet ist. Über dieses Dosierorgan wird der unterhalb des Dosierorgans umlaufend angetriebenen Schleuderscheibe das sich im Vorratsbehälter befindliche rieselförmige Streugut in einstellbaren Mengen zugeleitet. Auf der rotierend angetriebenen Schleuderscheibe sind zwei jeweils eine Leitfläche aufweisende Wurfflügel angeordnet, die das zu verteilende Streugut auf Abwurfgeschwindigkeit beschleunigen. Das aus dem einstellbaren Einlauf der Schleuderscheibe und der Wurfschaufel zugeleitete Material wird von der Leitfläche der Wurfschaufel erfasst und auf Abwurfgeschwindigkeit beschleunigt und über den sog. Streusektor in Breitverteilung auf der Bodenoberfläche verteilt.

Bei dem ersten Kontakt der Streugutpartikel mit der Leitfläche der Wurfschaufel werden relativ große Kräfte auf die Streugutpartikel ausgeübt. Hierdurch werden die Streugutpartikel teilweise zerstört oder springen unkontrolliert von der Wurfschaufel weg. Sie prallen quasi von der Leitfläche zurück. Somit können die Streugutpartikel nicht in der gewünschten Weise von der Wurfschaufel beschleunigt und nicht in der gewünschten Weise in Breitverteilung auf der Bodenoberfläche verteilt werden.

Der Erfindung liegt die Aufgabe zugrunde, eine Zerstörung der Düngerpartikel beim ersten Kontakt nach dem Dosieren mit der Leitfläche der Wurfschaufel möglichst zu vermeiden und ein unkontrolliertes Wegspringen der Streugutpartikel beim Kontakt mit der Leitfläche der Wurfschaufel zu vermindern.

Diese Aufgabe wird erfindungsgemäß dadurch gelöst, dass zumindest die Leitfläche des Wurfflügels mittels eines Federund/oder Dämpfungssystems zur Minderung der zumindest in der ersten Phase des Kontaktes zwischen Leitfläche und Partikel des Streugutes entstehenden Kontaktkraft auf der Schleuderscheibe angeordnet ist. Infolge dieser Maßnahmen wird der Aufprall der Streugutpartikel auf die Leitfläche der Wurfschaufel gedämpft. Hierdurch erfolgt eine Minderung der Kontaktkräfte. Durch das erfindungsgemäße System treten die großen Kontaktkräften nicht auf. Die entstehende Kontaktkraft beim Auftreffen der Streugutpartikel auf die Leitfläche wird reduziert, um ein Zerstören und unverwünschtes bzw. ungewolltes Abspringen oder Abprallen der Streugutpartikel bei deren ersten Kontakt mit der Leitfläche zu verhindern. Es erfolgt also eine Minderung der Kontaktkraft und Absorption der kinetischen Energie des Streugutes bzw. der Leitfläche der Wurfschaufel bei deren ersten Aufeinandertreffen. Das Feder- und Dämpfungssystem reduziert also in überraschend einfacher Weise die entstehende Kontaktkraft beim Auftreffen der Streugutpartikel auf die Leitflächen.

Eine einfache Verwirklichung dieses Zieles lässt sich dadurch erreichen, dass die Wurfschaufel mit der Leitfläche mittels des Feder- und/oder Dämpfungssystems auf der Schleuderscheibe angeordnet ist.

Auch lässt sich die Minderung der Kontaktkraft dadurch erreichen, dass das Feder- und/oder Dämpfungssystem in die Wurfschaufel und/oder Leitfläche integriert ist.

Dieses lässt sich beispielsweise dadurch verwirklichen, dass das Feder- und /oder Dämpfungssystem zwischen der Wurfschaufel und der Leitfläche angeordnet ist.

In einer anderen Ausführung lässt sich das Feder- und Dämpfungssystem für die Leitfläche und Wurfschaufel dadurch verwirklichen, dass im Bereich der Leitfläche eine federund/oder dämpfende Eigenschaften aufweisende Beschichtung auf die Wurfschaufel aufgebracht ist, dass diese Beschichtung das Feder- und/oder Dämpfungssystem bildet.

Auch kann das Feder- und Dämpfungssystem von der Wurfschaufel selbst gebildet werden.

In einfacher Weise lässt sich das Feder- und Dämpfungssystem auch dadurch verwirklichen, dass das feder- und/oder Dämpfungssystem als eine feder- und/oder dämpfende Eigenschaften aufweisende Materialschicht ausgebildet ist.

In einer anderen Ausgestaltung der Verwirklichung des Federund Dämpfungssystems ist vorgesehen, dass das Feder- und/oder Dämpfungssystem als Spiralfeder ausgebildet ist.

Die Dämpfung und Federung kann längs der Wurfschaufel gleichmäßig oder wechselnd oder schwellend verlaufen.

Die Wurfschaufel kann ein- oder mehrteilig ausgebildet sein.

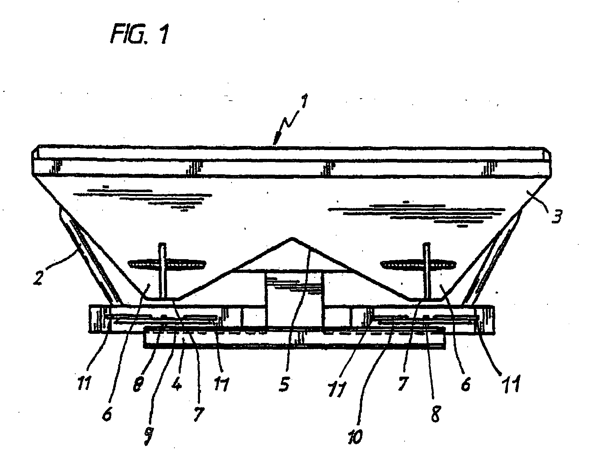

Weitere Einzelheiten der Erfindung sind den übrigen Unteransprüchen, der Beispielsbeschreibung und den Zeichnungen zu entnehmen. Hierbei zeigen
- Fig. 1: den Schleuderdüngerstreuer in der Ansicht von hinten und in Prinzipdarstellung,
- Fig. 2: die linke Schleuderscheibe mit Wurfschaufeln in Draufsicht in vergrößertem Maßstab und in Prinzipdarstellung,
- Fig. 3: eine weitere Schleuderscheibe mit Wurfschaufeln in der Draufsicht, in vergrößertem Maßstab und in Prinzipdarstellung,
- Fig. 4: reine weitere Schleuderscheibe mit Wurfschaufeln in der Draufsicht, in vergrößertem Maßstab und in Prinzipdarstellung,
- Fig. 5: eine weitere Schleuderscheibe mit Wurfschaufeln in der Draufsicht, in vergrößertem Maßstab und in Prinzipdarstellung,
- Fig. 6: eine weitere Schleuderscheibe mit Wurfschaufeln in der Draufsicht, in vergrößertem Maßstab und in Prinzipdarstellung,
- Fig. 7: eine weitere Schleuderscheibe mit Wurfschaufeln in der Draufsicht, in vergrößertem Maßstab und in Prinzipdarstellung,
- Fig. 8: eine weitere Schleuderscheibe mit Wurfschaufeln in der Draufsicht, in vergrößertem Maßstab und in Prinzipdarstellung,
- Fig. 9: eine weitere Schleuderscheibe mit Wurfschaufeln in der Draufsicht, in vergrößertem Maßstab und in Prinzipdarstellung,
- Fig. 10: eine weitere Schleuderscheibe mit Wurfschaufeln in der Draufsicht, in vergrößertem Maßstab und in Prinzipdarstellung,
- Fig. 11: eine weitere Schleuderscheibe mit Wurfschaufeln in der Draufsicht, in vergrößertem Maßstab und in Prinzipdarstellung,
- Fig. 12: eine weitere Schleuderscheibe mit Wurfschaufeln in der Draufsicht, in vergrößertem Maßstab und in Prinzipdarstellung und
- Fig. 13: eine weitere Schleuderscheibe mit Wurfschaufeln in der Draufsicht, in vergrößertem Maßstab und in Prinzipdarstellung.

Der Schleuderdüngerstreuer 1 ist mit dem Rahmen 2 ausgestattet, an dem der Vorratsbehälter 3 und ein Getriebezug 4 angebracht ist. Der untere Bereich des Vorratsbehälters 3 ist durch ein dachförmiges Mittelteil 5 in zwei Auslauftrichter 6 unterteilt, in deren Bodenplatten 7 sich nicht näher dargestellte Auslauföffnungen befinden. Diese Auflauföffnungen sind mit Hilfe von schieberförmigen Dosierelementen verschließbar und in unterschiedlichen Öffnungsweiten einstellbar.

Unterhalb der Auslauföffnungen sind auf den Ausgangswellen 8 des Getriebezuges 4 die beiden Schleuderscheiben 9 und 10 nebeneinander und beabstandet zueinander angeordnet. Auf dieser Schleuderscheibe sind die Wurfschaufeln 11 befestigt.

Den beiden Schleuderscheiben 9 und 10 wird das sich im Vorratsbehälter 3 des Schleuderdüngerstreuers befindlichen Streugut über die Auslauföffnungen in einstellbaren Mengen zugeführt. Die auf den Schleuderscheiben 9 und 10 angeordneten Wurfschaufeln 11 erfassen mit ihrer Leitfläche das zu dosierende Streugut und beschleunigen es auf Abwurfgeschwindigkeit und verteilen es in Breitverteilung auf der Bodenoberfläche. Die Schleuderscheiben 9 und 10 rotieren entgegengesetzt und die auf ihnen angeordneten Wurfschaufeln 11 sind entsprechend spiegelbildlich ausgebildet.

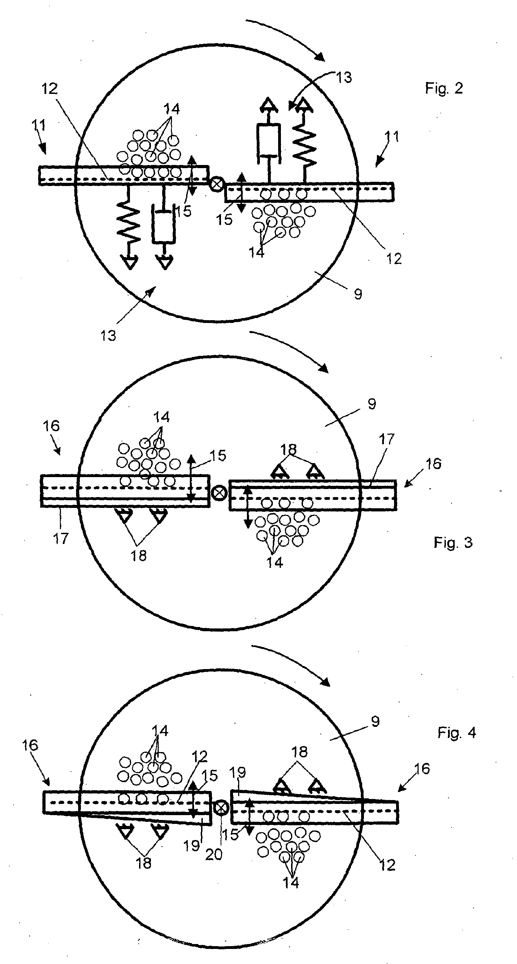

Bei der Schleuderscheibe 9 gemäß Fig. 2 sind die Wurfschaufel 11 mit der Leitfläche 12 mittels des Feder- und Dämpfungssystems 13 auf der Schleuderscheibe 9 angeordnet. Durch das Feder- und Dämpfungssystems 13, welches zwischen der Wurfschaufel 11 und der Schleuderscheibe 9 angeordnet ist, wird beim Auftreffen der aus dem Auslauf dosierten Streugutpartikel 14 auf die Leitfläche 12 der Wurfschaufel 9 in der ersten Phase des Kontaktes dieser Partikel 14 mit der Leitfläche 12, die zwischen Leitfläche 12 und Partikel 14 des Streugutes entstehenden Kontaktkraft gemindert. Teilweise wird die auftretende kinetische Energie durch das Feder- und Dämpfungssystem 13 absorbiert. Hierdurch wird eine Zerstörung und ein Wegspringen der Streugutpartikel 14 von der Leitfläche 12 bei deren ersten Kontakt mit der Leitfläche 12 verhindert bzw. entscheidend gemindert. Wie durch den Doppelpfeil 15 dargestellt ist, kann die Wurfschaufel 11 mit der Leitfläche 12 zunächst in Richtung des Feder- und Dämpfungssystems 13 beim Auftreffen der Streugutpartikel 14 auf die Leitfläche 12 ausweichen. Anschließend wird die Wurfschaufel 11 mit der Leitfläche 12 in die vorgesehene Position von dem Feder- und Dämpfungssystem 13 zurückgebracht.

Die auf der Schleuderscheibe 9 gemäß Fig. 3 angeordneten Wurfschaufeln 16 weisen ebenfalls ein Feder- und Dämpfungssystem 17 auf, welches zwischen den Befestigungsmitteln 18 der Wurfschaufeln 16 auf der Schleuderscheibe 9 und den Wurfschaufeln 16 selber angeordnet ist. Das Feder- und Dämpfungssystem 17 ist als eine sich über die Länge der Wurfschaufel 16 erstreckende Materialschicht ausgebildet, wobei sich die Feder- und Dämpfungseigenschaften 17 gleichmäßig über die gesamte Länge der Wurfschaufeln 16 erstreckt.

Die auf der Schleuderscheibe 9 gemäß Fig. 4 angeordneten Wurfschaufeln 18 sind entsprechend den Wurfschaufeln 16 gemäß der Fig. 3 angeordnet, jedoch mit dem Unterschied, dass das Feder- und Dämpfungssystem 19 von dem der Drehachse 20 benachbarten Bereich der Leitfläche 12 nach außen abnehmende Feder- und/oder Dämpfungseigenschaften aufweist.

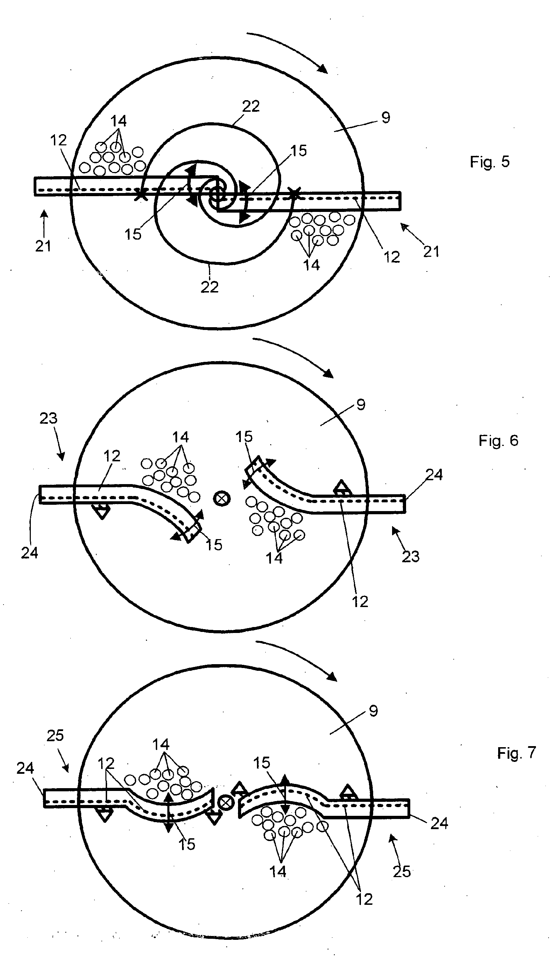

Die auf der Schleuderscheibe 9 gemäß Fig. 5 angeordneten Wurfschaufeln 21 sind mittels Spiralfedern 22, die das Federund Dämpfungssystem bilden, auf der Schleuderscheibe 9 angeordnet und können entsprechend beim Auftreffen der Streugutpartikel 14 deren Auftreffen auf die Leitfläche 12 der Wurfschaufeln 21 abfedern und/oder dämpfen. Hierbei kann sich die Leitfläche 12, wie durch den Doppelpfeil angedeutet hin- und herbewegen.

Die auf der Schleuderscheibe 9 gemäß Fig. 6 angeordneten Wurfschaufeln 23 bestehen in ihrer Gesamtheit mit der Leitfläche 12 aus einem Feder- und Dämpfungseigenschaften aufweisenden Material 24. Somit bildet das Material 24 selber bzw. die Wurfschaufel 23 das Feder- und Dämpfungssystem. Dieses Material 24 ist in der Lage, die Kontaktkraft in der ersten Phase des Auftreffens der Streugutpartikel 14 auf die Leitfläche 12 zu mindern. Die Leitfläche 12 weicht entsprechend des Doppelpfeils 15 zunächst aus und kehrt dann in ihre Ursprungslage wieder zurück.

Auch die auf der Schleuderscheibe 9 gemäß Fig. 7 angeordneten Wurfschaufeln 25 bestehen in ihrer Gesamtheit mit der Leitfläche 12 aus einem Material 24, welches Feder- und Dämpfungseigenschaften aufweist. Somit wird von der Wurfschaufel 25 und der Leitfläche 12 selber das Feder- und Dämpfungssystem 24 gebildet.

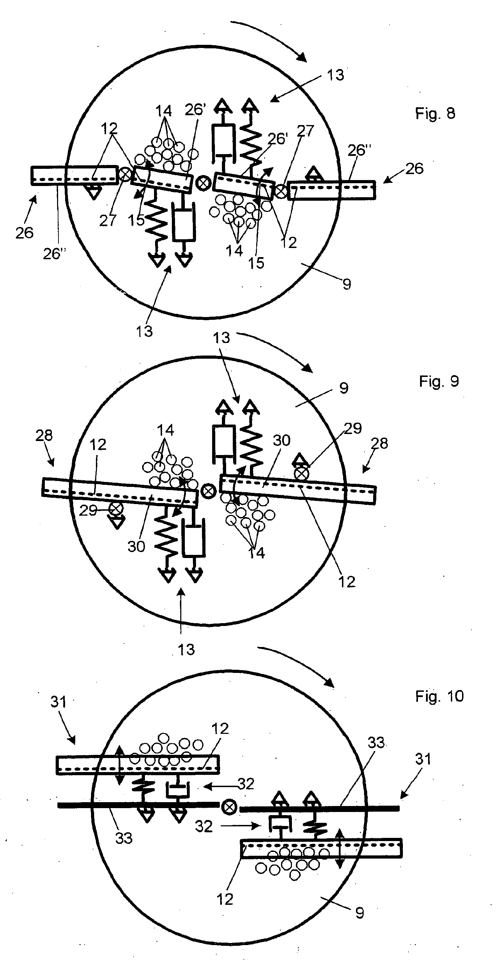

Die auf der Schleuderscheibe 9 gemäß Fig.8 angeordneten Wurfschaufeln 26 sind mit ihrer Leitfläche 12 zweigeteilt ausgebildet. Mit dem inneren Teil 26' der Wurfschaufel 26 und deren Leitflächen 12 ist das Feder- und Dämpfungssystem 13 zugeordnet, mit dem sie auf der Schleuderscheibe 9 angeordnet sind. Der äußere Bereich 26" der Wurfschaufel 26 und der zugehörigen Leitfläche 12 sind ohne Feder- und Dämpfungssystem fest mit der Schleuderscheibe 9 verbunden. Zwischen den beiden Bereichen 26' und 26" der Wurfschaufel 26 befindet sich ein Gelenkmittel 27.

Die auf der Schleuderscheibe 9 gemäß Fig. 9 angeordneten Wurfschaufeln 28 sind mittels eines Gelenkmittels 29 und eines Feder- und Dämpfungssystems 13 auf der Schleuderscheibe 9 angeordnet, somit kann beim Auftreffen der Streugutpartikel 14 auf die Leitfläche 12 im Innenbereich 30 der Wurfschaufel 28 durch das Feder- und Dämpfungssystem 13 die entstehende Kontaktkraft vermindert werden.

Die auf der Schleuderscheibe 9 gemäß Fig. 10 angeordneten und eine Leitfläche 12 aufweisenden Wurfschaufeln 31 sind mittels eines Feder-Dämpfungssystems 32 über eine Basisplatte 33 auf der Schleuderscheibe 9 angeordnet.

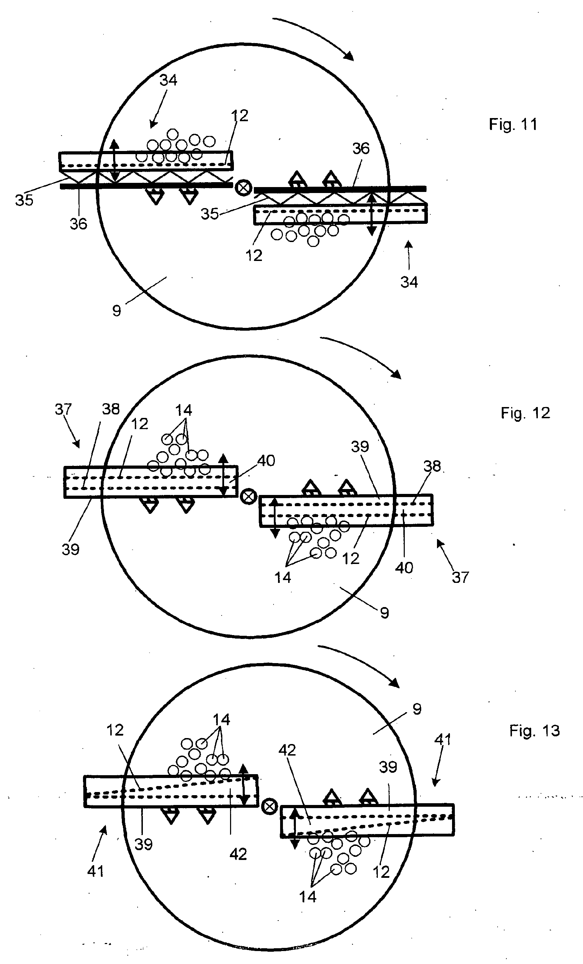

Die auf der Schleuderscheibe 9 gemäß Fig. 11 angeordneten und eine Leitfläche 12 aufweisenden Wurfschaufeln 34 sind mittels eines Feder-Dämpfungssystems 35, welches durch eine gewellte Feder gebildet wird, an einer auf der Schleuderscheibe 9 fest angeordneten Basisplatte 36 befestigt.

Bei dem Ausführungsbeispiel gemäß Fig. 12 sind die Wurfschaufeln 37 während des Betriebes fest und unbeweglich auf der Schleuderscheibe 9 angeordnet. Um hier dennoch ein Feder- und Dämpfungssystem verwirklichen zu können, ist auf der Innenseite 38 der aufrechten Wand 39 der Wurfschaufel 37 als Leitfläche 12 eine feder- und/oder dämpfende Eigenschaften aufweisende Beschichtung 40 aufgebracht. Diese Beschichtung 40 bildet dass Feder- und Dämpfungssystem. Beim Auftreffen der Düngerpartikel 14 auf die von dem die federnde und dämpfende Eigenschaften aufweisende Beschichtung 40 gebildete Leitfläche 12 wird die kinetische Energie vermindert und/oder absorbiert.

Die auf der Schleuderscheibe 9 gemäß Fig. 13 angeordneten Wurfschaufeln 41 unterscheiden sich mit ihrer Leitfläche 12 von den Wurfschaufeln 37 und deren Leitfläche 12 gemäß Fig. 12 dadurch, dass die auf der Wand 39 der Wurfschaufeln 41 als Beschichtung 42 aufgebrachte Leitfläche 12 aus einem Federund Dämpfungseigenschaften aufweisenden Material besteht. Hierbei ist diese die Feder- und Dämpfungseigenschaften aufweisende Materialschicht 42 des Feder- und Dämpfungssystems mit von der Drehachse benachbarten Bereich der Leitfläche 12 längs der Leitfläche 12 mit wechselnden Feder- und Dämpfungseigenschaften ausgestattet, wobei die Feder- und Dämpfungseigenschaften in diesem speziellen Ausführungsbeispiel von innen nach außen abnehmen, wie dort symbolisch durch den keilförmigen Verlauf dargestellt ist.

## Patentansprüche

1. Schleuderdüngerstreuer, bestehend aus einem rieselförmiges Streugut, insbesondere Dünger enthaltenden Vorratsbehälter mit wenigstens einem einstellbaren Auslauf, und einer unterhalb dessen umlaufenden Schleuderscheibe mit mindestens einem eine das zu verteilende Streugut auf Abwurfgeschwindigkeit beschleunigende Leitfläche aufweisenden Wurfflügel, **dadurch gekennzeichnet, dass** zumindest die Leitfläche (12) des Wurfflügels (11,16,18,21,25,26,28,31,34,37,41), mittels eines Federund/oder Dämpfungssystems (13,17,19,22,24,32,35,40,42) zur Minderung der zumindest in der ersten Phase des Kontaktes zwischen Leitfläche (12) und Partikel (14) des Streugutes entstehenden Kontaktkraft auf der Schleuderscheibe (9) angeordnet ist.

2. Schleuderdüngerstreuer nach Anspruch 1, **dadurch gekennzeichnet, dass** die Wurfschaufel (11,16,18,21,25,26,28,31,34,37,41) mit der Leitfläche mittels des Feder- und/oder Dämpfungssystems (13,17,19,22,24,32,35,40,42) auf der Schleuderscheibe (9) angeordnet ist.

3. Schleuderdüngerstreuer nach Anspruch 1, **dadurch gekennzeichnet, dass** das Feder- und/oder Dämpfungssystem (17,19,24,40,42) in die Wurfschaufel (16,18,23,25,37,41) und/oder Leitfläche (12) integriert ist.

4. Schleuderdüngerstreuer nach Anspruch 3, **dadurch gekennzeichnet, dass** das Feder- und /oder Dämpfungssystem (32,35) zwischen der Wurfschaufel (31,34) und der Leitfläche (12) angeordnet ist.

5. Schleuderdüngerstreuer nach Anspruch 3, **dadurch gekennzeichnet, dass** im Bereich der Leitfläche (12) eine feder- und/oder dämpfende Eigenschaften aufweisende Beschichtung (40,42) auf die Wurfschaufel (37,41) aufgebracht ist, dass diese Beschichtung (40,42) das Feder- und/oder Dämpfungssystem bildet.

6. Schleuderdüngerstreuer nach Anspruch 3, **dadurch gekennzeichnet, dass** das Feder- und/oder Dämpfungssystem (24) von der Wurfschaufel (23,25) gebildet wird.

7. Schleuderdüngerstreuer nach einem oder mehreren der vorstehenden Ansprüche, **dadurch gekennzeichnet, dass** das feder- und/oder Dämpfungssystem (40,42) als eine Federund/oder dämpfende Eigenschaften aufweisende Materialschicht (40,42) ausgebildet ist.

8. Schleuderdüngerstreuer nach Anspruch 1, **dadurch gekennzeichnet, dass** das Feder- und/oder Dämpfungssystem als Spiralfeder (22) ausgebildet ist.

9. Schleuderdüngerstreuer nach einem oder mehreren der vorstehenden Ansprüche, **dadurch gekennzeichnet, dass** das Feder- und/oder Dämpfungssystem (13,17,19,24,32,35,40,42) der gesamten Leitfläche (12) und/oder Wurfschaufel (11,16,18,21,25,26,28,31,34,37,41) zugeordnet ist.

10. Schleuderdüngerstreuer nach Anspruch 1, **dadurch gekennzeichnet, dass** das Feder- und/oder Dämpfungssystem (13,17,19,24,32,35,40,42) zumindest dem der Drehachse benachbarten Bereich der Leitfläche (12) und/oder Wurfschaufel (11,16,18,21,25,26,28,31,34,37,41) zugeordnet ist.

11. Schleuderdüngerstreuer nach Anspruch 9, **dadurch gekennzeichnet, dass** das Feder- und/oder Dämpfungssystem (19,42) von dem der Drehachse benachbarten Bereich der Leitfläche (12) und/oder Wurfschaufel (18,41) nach außen abnehmende Feder- und/oder Dämpfungseigenschaften aufweist.

12. Schleuderdüngerstreuer nach Anspruch 9, **dadurch gekennzeichnet, dass** das Feder- und/oder Dämpfungssystem (19,42) von dem der Drehachse benachbarten Bereich der Leitfläche (12) und/oder Wurfschaufel (18,41) nach innen abnehmende Feder- und/oder Dämpfungseigenschaften aufweist.

13. Schleuderdüngerstreuer nach Anspruch 9, **dadurch gekennzeichnet, dass** das Feder- und/oder Dämpfungssystem (35) von dem der Drehachse benachbarten Bereich der Leitfläche und/oder Wurfschaufel (34) längs der Leitfläche (12) wechselnde Feder- und/oder Dämpfungseigenschaften aufweist.

14. Schleuderdüngerstreuer nach einem oder mehreren der vorstehenden Ansprüche, **dadurch gekennzeichnet, dass** die Leitfläche (12) und/oder Wurfschaufel (26) zumindest zweigeteilt ausgebildet ist, dass dem inneren Teil (26') der Wurfschaufel (26) und/oder Leitfläche (12) das Federund/oder Dämpfungssystem (13) zugeordnet ist, dass der äußere Bereich der Leitfläche (12) und/oder Wurfschaufel (26") ohne Feder- und/oder Dämpfungssystem fest mit der Schleuderscheibe (9) verbunden ist.

15. Schleuderdüngerstreuer nach einem oder mehreren der Ansprüche 1 bis 13, **dadurch gekennzeichnet, dass** die Leitfläche (12) und/oder Wurfschaufel (26) zumindest zweigeteilt ausgebildet ist, dass dem äußeren Teil der Wurfschaufel und/oder Leitfläche das Feder- und/oder Dämpfungssystem zugeordnet ist, dass der innere Bereich der Leitfläche und/oder Wurfschaufel ohne Feder- und/oder Dämpfungssystem fest mit der Schleuderscheibe verbunden ist.

16. Schleuderdüngerstreuer nach einem oder mehreren der vorstehenden Ansprüche, **dadurch gekennzeichnet, dass** die Wurfschaufel (26) und/oder Leitfläche (12) im Bereich zwischen ihrem inneren und äußeren Ende mittels zumindest eines Drehlagers (27) mit der Schleuderscheibe (9) verbunden ist, und dass zwischen den inneren Enden und dem Drehlager (27) jeweils das Feder- und Dämpfungssystem (13) zwischen der Schleuderscheibe (9) und Wurfschaufel (26) und/oder der Leitfläche (12) angeordnet ist.

17. Schleuderdüngerstreuer nach einem oder mehreren der vorstehenden Ansprüche, **dadurch gekennzeichnet, dass** die gesamte Wurfschaufel mit der Leitfläche aus einem Federund/oder Dämpfungseigenschaften aufweisendem Material besteht.
[Anhängende Zeichnungen]
Anzahl Anhängende Zeichnungen: [13]
